# EUROPEAN PATENT APPLICATION

(11) **EP 0 736 950 A1**
(43) Date of publication of application: **09.10.1996**
(21) Application number: 96104944.2
(22) Date of filing: 28.03.1996
(51) Int. Cl.: H02H 9/04

(54) **Device for protecting electronic circuits against supply battery disconnection (load dump) and/or overvoltages in the electrical supply circuit of motor vehicles**

(30) Priority: 04.04.1995 IT TO950255
(71) Applicant: BITRON S.p.A., I-10064 Pinerolo (Torino) (IT)
(72) Inventor: Campanino, Enrico, 10098 Rivoli TO (IT)
(74) Representative: Lotti, Giorgio

(57) **Abstract**

A device is described for protecting against supply battery disconnection (load dump) and/or transients present in the electrical supply circuit of motor vehicles downstream of the alternator and battery; the main characteristic of the described device is that the device comprises a series thermistor (PTC) and a parallel varistor (VDR).

## Description

This invention relates to a device for protecting against transients present in the 12 Volt electrical supply circuit of motor vehicles, downstream of the alternator and battery. It is well known that all inductive loads, relays, motors, solenoid valves and high voltage coil directly or indirectly induce overvoltages of ± 300 Volts lasting a few microseconds, ± 100 Volts lasting a few milliseconds and, the most destructive of all, the so-called load dump of +80 Volts lasting 400 milliseconds, generated by poor contact or actual disconnection of the battery while the alternator is rotating.

These transients have the power to destroy the various electronic circuits on board if they are not protected individually and effectively.

Electronic components for this purpose have been commercially available for some time, but because of the large currents concerned and hence the considerable dissipation, they are very bulky physically if correctly dimensioned, and in addition are very costly.

The object of the present invention is to provide a device for protecting against the transients present in the 12 Volt electrical supply circuit of motor vehicles which represents an improvement over known devices.

This object is attained according to the present invention by a device for protecting against supply battery disconnection (load dump) and/or transients present in the electrical supply circuit of motor vehicles downstream of the alternator and battery, characterised by comprising a thermistor connected in series with, and a varistor connected in parallel with, the electronic circuit to be protected.

Further characteristics and advantages of the present invention will be apparent from the description given hereinafter with reference to the accompanying drawings, which are provided by way of non-limited example and in which:
Figures 1 and 1A are schematic representations of known devices;
Figure 2 shows the electrical schematic of a protection device according to the invention;
Figure 3 represents the curve of voltage against time for the protection circuit of Figure 2;
Figure 4 is a schematic representation of a known protection device;
Figure 5 shows the electrical schematic of a protection circuit according to the invention;
Figure 6 shows the electrical schematic of a modification of the protection circuit of Figure 2.

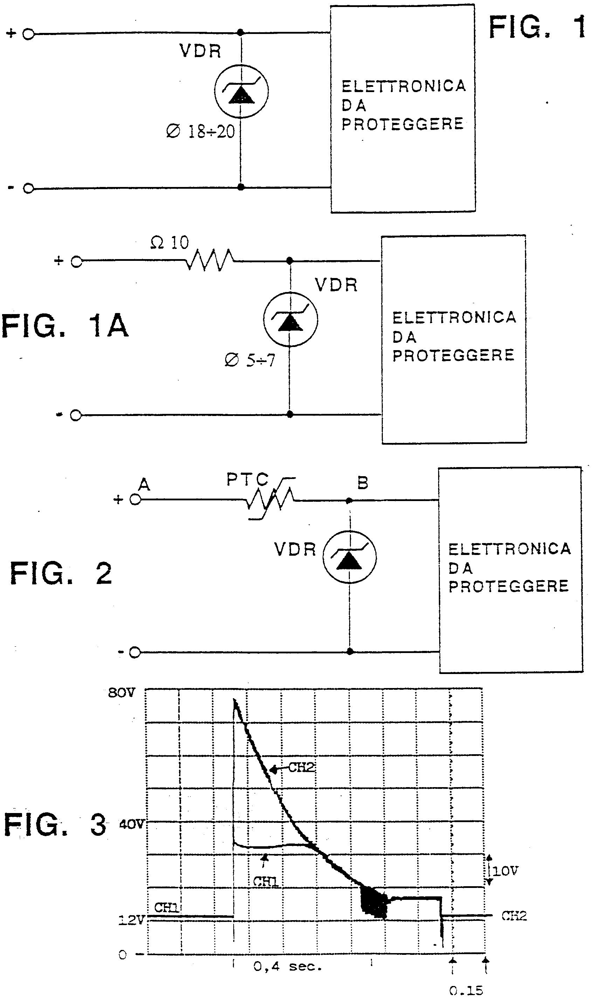

The protection device of the present invention has been designed for use in small-dimension circuits in which because of the particular application it is not possible to limit the current in the downstream circuit by resistors in series with the supply (see Figure 1A) because of the high voltage drop which would result from the nominal current absorbed by the circuit.

As can be seen from the schematic of Figure 2, the device of the present invention is composed of a PTC thermistor of very low ohmic value (0.5 - 1 Ω), chosen on the basis of the nominal current, and a VDR varistor with a clamp voltage of less than 40 Volts (maximum voltage acceptable by normal 12 Volt electronic circuits used in the automobile field) and with a current capacity for very short times which is much lower than necessary, and is hence of very small physical dimensions. These characteristics of the VDR varistor are chosen as if it were mounted with high-value resistors in series (see Figure 1A).

In the presence for example of a load dump of + 80 Volts lasting 0.400 seconds, the peak current through the PTC thermistor is very high and much higher than its rated current. The VDR varistor, which acts as a power zener, short-circuits the applied voltage difference via the PTC thermistor to the negative pole of the battery. The PTC thermistor, traversed by high current, instantaneously reaches its trip point.

Because of its positive temperature coefficient, the PTC thermistor increases its resistance by 20-30 times, reducing the current across the VDR varistor to a minimum value. In any event, the VDR varistor need be dimensioned to withstand high peak currents for only a few milliseconds, instead of for some hundreds of milliseconds.

To obtain the same protection with the VDR varistor alone, as in the prior art (Figure 1), the physical dimensions of this latter would not be less than a disc of 18-19 mm diameter, against a VDR varistor in the circuit of the present invention with a diameter of only 5-7 mm. The diameter of the PTC thermistor is also about 5-7 mm

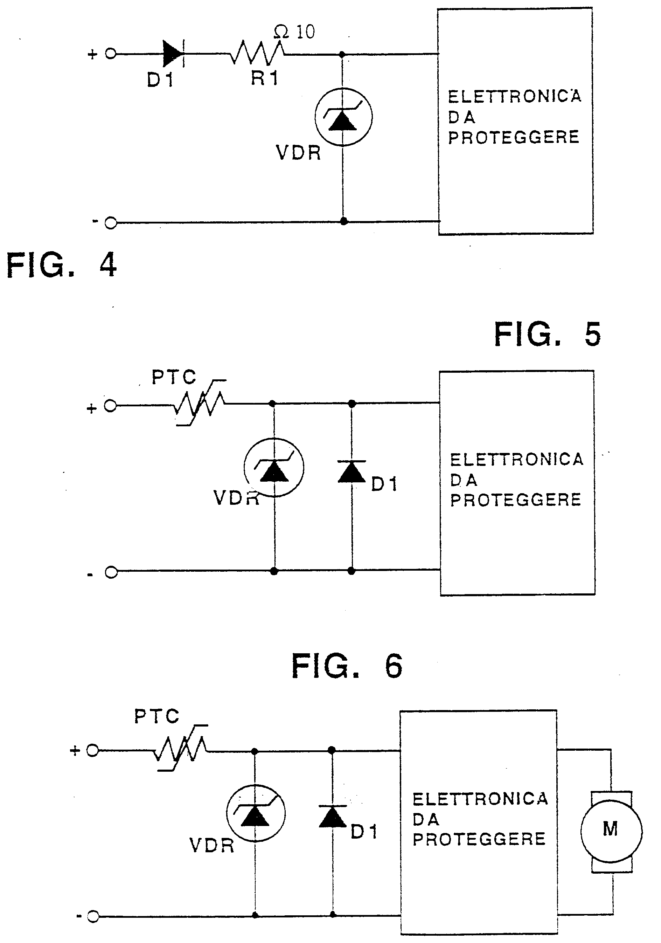

The best results are obtained with very fast PTC thermistors designed for use as resettable thermofuses of conductive polymer material. The PTC thermistor must be chosen such as to have a trip current of at least double the required rated current, taking also account of the temperature range within which it is used. Figure 3 shows by oscillograph the action of the protection circuit according to the invention when a load dump pulse of + 80 V is applied to it.

In the oscillogram of Figure 3, CH1 indicates the voltage at point B of Figure 2 and CH2 indicates the voltage at point A (load dump pulse applied).

As can be seen, after a fluctuation of a few milliseconds at about 40 Volts the voltage stabilizes at about 35 Volts (clamping effect of the VDR varistor) to then fall to the normal supply voltage of 12 Volts. Applying the circuit of Figure 2, in which the PTC thermistor is in series, further protection is obtained. In the case of short-circuiting of the downstream electronic circuit, the PTC thermistor increases its resistance to a high value, so preventing short-circuiting of the supply line towards the battery.

Figure 4 shows the known schematic for protecting against reversal of the supply voltage normally required by electrical circuits used in motor vehicles.

As can be seen, to achieve this object it is sufficient to add a diode (D1) of adequate value, in series with the feed resistor R1, to the device of Figure 1A. However the provision of a diode in series causes a further voltage drop of at least 0.8-0.9 Volts, which is not always acceptable by the downstream electronic circuitry.

The circuit of Figure 5 shows that the use of the device of Figure 2 enables protection against supply voltage reversal to be also added, by connecting the diode D1 not in series, but in parallel with the VDR varistor after the PTC thermistor. If reversal takes place, the diode D1 conducts directly and the PTC thermistor instantaneously increases its resistance by the effect of the current (short-circuit current) passing through it.

When the polarity error disappears, the resistance of the PTC thermistor returns to its nominal value, to restore normal operation to the device.

In the schematics of the various accompanying figures, the varistor (VDR) is shown as an encircled zener. Physically the component is generally a disc of sintered metal oxides connected to two rheophores. Its diameter is a function of the maximum current (peak and nominal) which it must withstand on attaining its clamping voltage. To safely overcome transients and the load dump, the component, if used without series resistors, is required to withstand a power dissipation level which requires the use of large mechanical dimensions (diameter and thickness) which are unacceptable in the large majority of applications. The circuit of the invention reliably solves this problem from the mechanical, electrical and cost aspects.

The device of the present invention has also been designed to protect an electronic driver circuit for a small direct current motor, mounted in a reduction unit for automobile use, eg. for operating air entry/recirculation/mixing/distribution flap valves in ventilation units. The nominal and starting current of the motor do not permit the use of resistors in series with the supply because of the large voltage drop which would occur. The device of Figures 2 and 5 solves the problem by using a PTC thermistor of conductive polymer with a constant resistance of only 0.5-1 Ω and a rated working current of 0.5-0.6 Amps. As already described, when protection is required, the resistance increases instantaneously to protect the VDR varistor and the entire downstream electronic circuit (Figure 6).

Instead of being combined with a varistor (VDR), the same device of Figures 2, 5 and 6 can be combined with any other component able to suppress transients (such as a zener diode, a monodirectional silicon suppressor, etc.), provided it is chosen with suitable characteristics for coupling to the PTC thermistor and able to dissipate the instantaneous power required.

The device of the invention has the following advantages:
- the use of a series-connected thermofusible PTC thermistor of low ohmic value enables the protection device to be used in those very high absorption circuits in which similar protection using a VDR varistor but with a fixed resistor in series (see Figure 4) would require for equal VDR dimensions and power a resistor greater than 10 Ω and a power of at least 1 Watt, which would be unacceptable because of the high voltage drop in the circuit in which it is used. It should be noted that with a current of for example 0.1 A in a circuit such as that of Figure 4, the voltage drop is 1 V; in the circuit of the invention shown in Figure 5, for equal current a 1 Ω PTC thermistor results in a voltage drop of only 0.1 V.
- The small diameter of 5-7 mm for each component (PTC thermistor and VDR varistor) allows effective protection in small-dimension mechanical circuits with a large number of components.
- The use of the PTC thermistor also allows protection against short-circuiting to the supply, so avoiding serious possibilities of fire and melting of connection cables.
- The PTC thermistor acts as a self-resettable fuse, which disconnects automatically on eliminating the cause of the fault.
- The small dimensions of the two components eliminate problems of mechanical stress under vibration.
- Elimination of a series-connected diode for protection against supply voltage reversal, so achieving a low voltage drop.

The characteristics of the control device of the invention and its advantages are apparent from the aforegoing description.

Because of its small dimensions, the described device can be easily used in cases in which known devices cannot be connected for space reasons.

The device has been presented with reference to its use in control devices for a flap valve operating motor in a vehicle, but can be equally used, possibly with small modifications, in other applications in which the movement of small d.c. motors has to be protected in a simple manner without problems.

It is apparent that further modifications can be made to the protection device of the present invention without leaving the principles of novelty present in the inventive idea, and moreover in the practical implementation of the invention the materials and shapes of the illustrated details can be different, and that these can be replaced by technically equivalent elements.

## Claims

1. A device for protecting against supply battery disconnection (load dump) and/or transients present in the electrical supply circuit of motor vehicles downstream of the alternator and battery, characterised by comprising a thermistor (PTC) connected in series with, and a varistor (VDR) connected in parallel with, the electronic circuit to be protected.

2. A protection device as claimed in claim 1, characterised in that a diode (D1) is connected in parallel with the varistor (VDR).

3. A protection device as claimed in claim 1 or 2, characterised by being connected to protect a control circuit for a flap valve operating motor in a motor vehicle.

4. A protection device as claimed in one or more of the preceding claims, characterised in that the varistor (VDR) is dimensioned to withstand high currents for a few milliseconds.

5. A protection device as claimed in one or more of the preceding claims, characterised in that the thermistor (PTC) has a resistance of only 0.5-1 ohm with a working current of 0.5-0.6 A.

6. A protection device as claimed in one or more of the preceding claims, characterised in that the varistor (VDR) consists of a zener power diode.

7. An electronic protection device, in particular for use in motor vehicles, in accordance with the aforegoing description and the accompanying drawings.
